(19) Europäisches Patentamt
European Patent Office
Office européen des brevets

(11) Veröffentlichungsnummer : **0 144 580**
**B1**

(12) # EUROPÄISCHE PATENTSCHRIFT

(45) Veröffentlichungstag der Patentschrift : **08.07.87**

(51) Int. Cl.[4] : **C 09 B 62/002**, C 09 B 19/00, D 06 P 3/10

(21) Anmeldenummer : **84111352.5**

(22) Anmeldetag : **24.09.84**

(54) **Triphendioxazin-Farbstoffe.**

(30) Priorität : **06.10.83 DE 3336362**

(43) Veröffentlichungstag der Anmeldung : **19.06.85 Patentblatt 85/25**

(45) Bekanntmachung des Hinweises auf die Patenterteilung : **08.07.87 Patentblatt 87/28**

(84) Benannte Vertragsstaaten : **CH DE FR GB LI**

(56) Entgegenhaltungen : **EP-A- 0 053 743**

(73) Patentinhaber : **BAYER AG**
**Konzernverwaltung RP Patentabteilung**
**D-5090 Leverkusen 1 Bayerwerk (DE)**

(72) Erfinder : **Jäger, Horst, Dr.**
**Carl-Rumpff-Strasse 37**
**D-5090 Leverkusen 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 144 580 B1

Jouve, 18, rue St-Denis, 75001 Paris, France

**Beschreibung**

Die vorliegende Erfindung betrifft neue Triphendioxazin-Farbstoffe der Formel

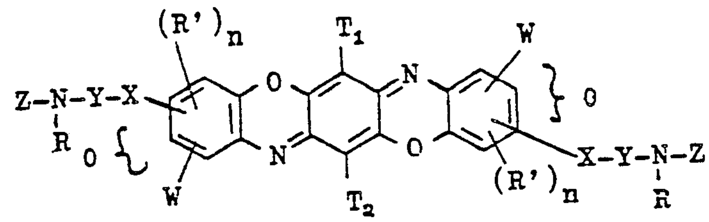

(1)

worin

R für Wasserstoff oder gegebenenfalls substituiertes $C_1$-$C_6$-Alkyl steht,

$T_1$ und $T_2$ unabhängig voneinander für H, Cl, Br, gegebenenfalls substituiertes $C_1$-$C_4$-Alkoxy, $C_1$-$C_4$-Alkyl, Phenyl oder Phenoxy stehen,

X für O, S oder

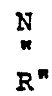

steht,

Z eine Reaktivgruppe oder Wasserstoff bedeutet,

Y für einen gegebenenfalls weitersubstituierten zweiwertigen aliphatischen, araliphatischen, cycloaliphatischen oder aromatischen Rest steht,

R′ für Halogen, insbesondere Cl und Br. $SO_3H$, COOH, gegebenenfalls substituiertes $C_1$-$C_4$-Alkyl oder $C_1$-$C_4$-Alkoxy steht,

R″ für Wasserstoff, oder gegebenenfalls substituiertes $C_1$-$C_4$-Alkyl steht und für den Fall, daß Y einen gegebenenfalls substituierten zweiwertigen aliphatischen Rest bedeutet, zusammen mit R auch für Alkylen, vorzugsweise $—CH_2CH_2—$ steht,

n 0 oder 1 bedeutet und

W für eine gegebenenfalls substituierte Sulfonamidgruppe steht

und worin der Rest W in ortho-Stellung zum Substituenten

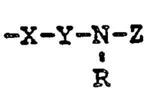

steht.

Der Substituent

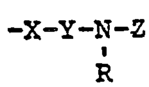

steht vorzugsweise in p-Stellung zum Ring-Stickstoff.

Der Rest W steht in der Formel (1) bevorzugt für einen gegebenenfalls substituierten Sulfonamid-Rest der wasserlöslich machende Gruppen (wie $SO_3H$, COOH) enthält.

Insbesondere steht W für folgende Gruppierungen :

a) Rest der Formel

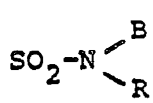

wobei B = $C_2$-$C_6$-Alkylen-$(O)_n$—$SO_3H$
worin n = 0 oder 1
und wobei R insbesondere auch für B stehen kann,

b) Rest der Formel $SO_2—NH—SO_2—R'''$ wobei R‴ für gegebenenfalls substituiertes $C_1$-$C_6$-Alkyl (vorzugsweise für $CH_3$) oder Aryl (insbesondere gegebenenfalls substituiertes Phenyl) steht,

c) Rest der Formel

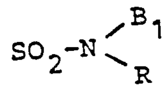

wobei $B_1$ = aromatischer Rest mit mindestens einer $SO_3H$-Gruppe, bevorzugt ein Phenylrest mit 1 bis 2 $SO_3H$-Gruppen.

Als Substituenten für R = gegebenenfalls substituiertes $C_1$-$C_6$-Alkyl kommen vorzugsweise in Frage : OH, $OCH_3$, COOH, $SO_3H$ oder $OSO_3H$.

Beispiele für R sind : $CH_3$, $C_2H_5$, $nC_3H_7$, $i$-$C_3H_7$, $n$-$C_4H_9$, die durch OH, $OCH_3$, COOH oder $SO_3H$ substituiert sein können. Substituenten der gegebenenfalls substituierten Phenyl- und Phenoxyreste $T_1$ bzw. $T_2$ sind z. B. B, Cl, $CH_3$, $C_2H_5$, $OCH_3$ und $OC_2H_5$.

Die Reste Y tragen, falls sie weitersubstituiert sind, vorzugsweise folgende weitere Substituenten ; $SO_3H$, COOH, $CH_3$, $OCH_3$, gegebenenfalls substituiertes Phenyl. Weiterhin können die araliphatischen, aliphatischen oder cycloaliphatischen Reste Y durch Heteroatome oder Heteroatomgruppen oder durch die Phenylengruppierung unterbrochen sein. Beispielhaft seien genannt : O, S, NH, $N(COCH_3)$.

Aromatische Reste Y sind beispielsweise folgende :

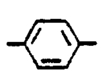 , 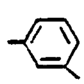 , 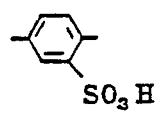 , 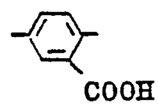 , 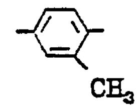

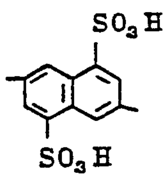 ,

Araliphatische Rest Y sind beispielsweise folgende :

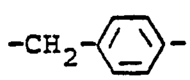 , 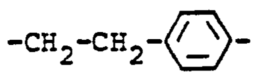 , 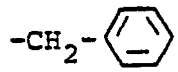

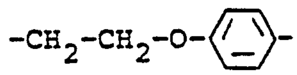

Aliphatische bzw. cycloaliphatische Rest Y sind beispielsweise folgende :

$-(CH_2)_{2-6}$ , 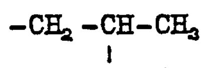 , 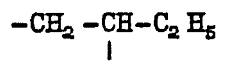 ,

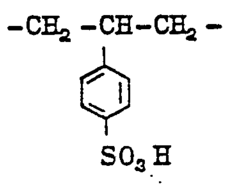 , 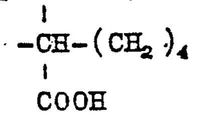 , $-CH_2-CH_2-O-CH_2-CH_2-$

$-CH_2-CH_2-S-CH_2-CH_2-$ , 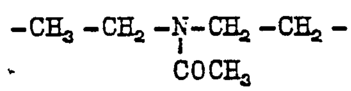

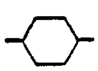 , 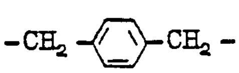 , 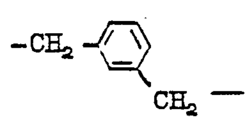

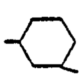

Als Beispiele für die Reste B seien folgende genannt:

$-(CH_2)_{2-4}-SO_3H$, $-(CH_2)_2-OSO_3H$,

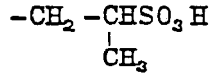 , 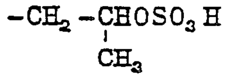 , 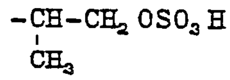

Ein geeigneter Rest

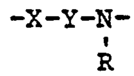

ist insbesondere auch

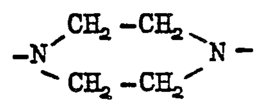

Geeignete Reaktivgruppen Z sind insbesondere solche, die mindestens einen reaktiven Substituenten an einen 5- oder 6-gliedrigen aromatisch-heterocyclischen Ring gebunden enthalten, bzw. an einen Monazin-, Diazin-, Triazin-, z. B. Pyridin-, Pyrimidin-, Pyridazin-, Pyrazin-, Thiazin-, Oxazin oder asymmetrischen oder symmetrischen Triazinring, oder an ein derartiges Ringsystem, welches einen oder mehrere ankondensierte aromatisch-carbocyclische Ringe aufweist, wie ein Chinolin-, Phthalazin-, Cinnolin-, Chinazolin-, Chinoxalin-, Acridin-, Phenazin- und Phenanthridin-Ring-System ;

Unter den reaktiven Substituenten am Heterocyclus sind beispielsweise zu erwähnen :

Halogen (Cl, Br oder F), Ammonium einschließlich Hydrazinium, Sulfonium, Sulfonyl, Azido-($N_3$), Rhodanido, Thio, Thiolether, Oxiether, Sulfinsäure und Sulfonsäure.

Im einzelnen sind beispielsweise zu nennen :

2,4-Difluortriazinyl-, 2,4-Dichlortriazinyl-6-, Monohalogen-sym.-triazinylreste, insbesondere Monochlor- und Monofluortriazinylreste, die durch Alkyl, Aryl, Amino, Monoalkylamino, Dialkylamino, Aralkylamino, Arylamino, Alkoxy, Aryloxy, Alkylthio, Arylthio substituiert sind, wobei Alkyl vorzugsweise gegebenenfalls substituiertes $C_1$-$C_4$-Alkyl, Aralkyl vorzugsweise gegebenenfalls substituiertes Phenyl-$C_1$-$C_4$-Alkyl und Aryl vorzugsweise gegebenenfalls substituiertes Phenyl oder Naphthyl bedeutet und wobei bevorzugte Substituenten für Alkyl, Hydroxy, Cyan, $C_1$-$C_4$-Alkoxy, Carboxy, Sulfo oder Sulfato sind und für Phenyl und Naphthyl Sulfo, $C_1$-$C_4$-Alkyl, $C_1$-$C_4$-Alkoxy, Carboxy, Halogen oder Acylamino.

Im einzelnen seien folgende Reste genannt :

2-Amino-4-fluor-triazinyl-6, 2-Methylamino-4-fluortriazinyl-6, 2-Ethylamino-4-fluortriazinyl-6, 2-Isopropylamino-4-fluor-triazinyl-6, 2-Dimethylamino-4-fluor-triazinyl-6, 2-Diethylamino-4-fluor-triazinyl-6,-2-β-Methoxy-ethylamino-4-fluor-triazinyl-6, 2-β-Hydroxyethylamino-4-fluor-triazinyl-6, 2-Di-(β-hydroxyethyla mino)-4-fluor-triazinyl-6-, 2-β-Sulfoethylamino-4-fluor-triazinyl-6, 2-β-Sulfoethyl-methylamino-4-fluor-triazinyl-6, 2-Carboxymethylamino-4-fluor-triazinyl-6, 2-β-Cyanethylamino-4-fluor-triazinyl-6, 2-Benzoylamino-4-fluor-triazinyl-6, 2-β-Phenylethylamino-4-fluor-triazinyl-6, 2-Benzyl-methylamino-4-fluor-triazinyl-6, 2-(x-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2′, 5′-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-4-fluor-triazinyl-6, 2-(2′-Methyl-4′-sulfophenyl)-amino-4-fluor-triazinyl-6, 2-(2′-Methyl-5′-sulfophenyl)-amino-4-fluor-triazinyl-6, 2-(2′-Chlor-4′-sulfophenyl)-amino-4-fluor-triazinyl-6, 2-(2′-Chlor-5′-sulfophenyl)-amino-4-fluor-triazinyl-6, 2-(2′-Methoxy-4′-sulfophenyl)-amino-4-fluor-triazinyl-6, 2-(o-, m-, p-Carboxyphenyl)-amino-4-fluor-triazinyl-6, 2-(2′,4′-Disulfophenyl)-amino-4-fluor-triazinyl-6, 2-(3′,5′-Disulfophenyl)-amino-4-fluor-triazinyl-6, 2-(2′-Carboxy-4-sulfophenyl)-amino-4-fluor-triazinyl-6, 2-(2′-Carboxy-4-sulfophenyl)-amino-4-fluor-triazinyl-6, 2-(6′-Sulfonaphthyl-(2′))-amino-4-fluor-triazinyl-6, 2-(4′,8′-Disulfonaphthyl-(2′))-amino-4-fluor-triazinyl-6, 2-(6′,8′-Disulfonaphthyl-(2′))-amino-4-fluor-triazinyl-6, 2-(N-Methylphenyl)-amino-4-fluor-triazinyl-6, 2-(N-Ethylphenyl)-amino-4-fluor-triazinyl-6, 2-(N-β-Hydroxyethylphenyl)-amino-4-fluor-triazinyl-6, 2-(N-iso-Propylphenyl)-amino-4-fluor-triazinyl-6, 2-Morpholino-4-fluor-triazinyl-6, 2-Piperidino-4-fluor-triazinyl-6, 2-(4′,6′,8′-Trisulfonaphthyl-(2′))-4-fluor-triazinyl-6, 2-(3′,6′,8′-Trisulfonaphthyl-(2′))-4-fluor-triazinyl-6, 2-(3′, 6′-Disulfonaphthyl-(1′))-4-fluor-triazinyl-6, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl- bzw. N-Ethyl-N-(2,4-dichlortriazinyl-6)-amino-acetyl-, 2-Methoxy-4-fluor-triazinyl-6, 2-Ethoxy-4-fluor-triazinyl-6, 2-Phenoxy-4-fluor-triazinyl-6, 2-(o-, m- oder p-Sulfophenoxy)-4-fluor-triazinyl-6, 2-(o-, m- oder p-Methyl- oder -Methoxy-phenoxy-4-fluor-triazinyl-6, 2-β-Hydroxyethylmercapto-4-fluor-triazinyl-6, 2-Phenyl-mercapto-4-fluor-triazinyl-6, 2-(4'-Methylphenyl)-mercapto-4-fluortriazinyl, 2-(2',4'-Dinitrophenyl)-mercapto-4-fluor-triazinyl-6, 2-Methyl-4-fluor-triazinyl-6, 2-Phenyl-4-fluor-triazinyl-6 sowie die entsprechenden 4-Chlor- bzw. 4-Brom-Reste und die entsprechenden Halogen-atome mit tertiären Basen wie Trimethylamin, Triethylamin, Dimethyl-β-hydroxyethylamin, Triethanolamin, N,N-Dimethylhydrazin, Pyridin, α- oder γ-Picolin, Nicotinsäure oder Isonicotinsäure oder Sulfinaten insbesondere Benzolsulfinsäure erhältlichen Reste.

Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono- -di- oder -trichlormethyl- oder -5-carboalkoxy-pyrimidinyl-6-, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlorchinoxalin-3-carbonyl-, 2- oder 3-Monochlorchinoxalin-6-carbonyl-, 2- oder 3-Monochlorchinoxalin-6-sulfonyl-, 2,3-Dichlorchinoxalin-6-carbonyl-, 2,3-Dichlorchinoxalin-6-sulfonyl-, 1,4-Dichlorphthalazin-6-sulfonyl- oder -6-carbonyl-, 2,4-Dichlorchinazolin-7- oder -6-sulfonyl- oder -carbonyl-, 2- oder 3- oder 4-(4',5'-Dichlorpyridazon-6'-yl-1')-phenylsulfonyl- oder carbonyl-, β-(4',5'-Dichlorpyridazon-6'-yl-1')-ethylcarbonyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl, 2-Fluor-5,6-dichlor-4-pyrimidinyl-, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2-Fluor-4-dichlormethyl-5-chlorpyrimidin-6-yl, 2-Fluor-5-chlorpyrimidin-4-yl ; 2-Methyl-4-fluor-5-methylsulfonylpyrimidinyl-6 ; 2,6-Difluor-5-methyl-sulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6- carbomethoxy-4-pyrimidinyl-, 2,6-Difluor-5-trifluormethyl-4-pyrimidinyl ; sulfonylgruppenhaltige Triazinreste, wie 2,4-Bis-(phenylsulfonyl)-triazinyl-6-, 2-(3'-Carboxyphenyl)- sulfonyl-4-chlortriazinyl-6-, 2-(3'-Sulfophenyl)- sulfonyl-4-chlortriazinyl-6-, 2,4-Bis-(3'-carboxyphenyl- sulfonyl-)- triazinyl-6 ; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethylpyrimidinyl-4-, 2-Phenylsulfonyl-5-chlor-6-methyl-pyrimidinyl-4-, 2,6-Bis-methylsulfonyl-pyrimidinyl-4-, 2,6-Bismethylsulfonyl-5-chlor-pyrimidinyl-4-, 2,4-Bis-methylsulfonyl-pyrimidin-5-sulfonyl-, 2-Methylsulfonyl-pyrimidinyl-4, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methylpyrimidin-5-sulfonyl-, 2-Methylsulfonyl-5-nitro-6-methylpyrimidinyl-4-, 2,5,6-Tris-methylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxypyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-Sulfoethylsulfonyl-6-methyl-pyrimidinyl-4-, 2-Methylsulfonyl-5-brompyrimidinyl-4-, 2-Phenyl-sulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl-, 2,6-Bis-(methylsulfonyl)-pyrimidin-4- oder -5-carbonyl-, 2-Ethylsulfonyl-6-chlorpyrimidin-5-carbonyl-, 2,4-Bis- (methylsulfonyl)-pyrimidin-5-sulfonyl-, 2-Methylsulfonyl-4-chlor-6-methylpyrimidin-5-sulfonyl- oder -carbonyl- ; 2-Chlorbenzthiazol-5- oder -6-carbonyl- oder -5- oder -6-sulfonyl-, 2-Arylsulfonyl- oder -Alkylsulfonylbenzthiazol-5- oder -6-carbonyl- oder -5- oder -6-sulfonyl-, wie 2-Methylsulfonyl- oder 2-Ethylsulfonylbenzthiazol-5- oder -6-sulfonyl- oder -carbonyl-, 2-Phenylsulfonylbenzthiazol-5- oder -6-sulfonyl- oder carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl- oder sulfonyl-, 2-Chlor-4-methylthiazol- (1,3)-5-carbonyl- oder -4- oder -5-sulfonyl-, N-Oxid des 4-Chlor- oder 4-Nitrochinolin-5-carbonyl.

Desweiteren sind Reaktivgruppen der aliphatischen Reihe zu nennen, wie Acryloyl-, Mono-, Di- oder Trichlor-acryloyl-, wie $-CO-CH=CH-Cl$, $-CO-CCl=CH_2$, $-CO-CCl=CH-CH_3$, ferner $-CO-CCl=CH-COOH$, $-CO-CH=CCl-COOH$, β-Chlorpropionyl-, 3-Phenylsulfonylpropionyl-, 3-Methylsulfonylpropionyl-, 2-Fluor-2-chlor-3,3-difluorcyclobutan-1-carbonyl-, 2,2,3,3-Tetrafluorcyclobutan-carbonyl-1- oder -sulfonyl-1-, β-(2,2,3,3-Tetrafluorcyclobutyl-2)-aryloxy-, α- oder β-Bromacryloyl-, α- oder β-Alkyl- oder Arylsulfoacryloyl-Gruppe, wie α- oder β-Methylsulfonylacrylolyl, Chloracetyl.

In Formel (1) haben folgende Gruppierungen bevorzugte Bedeutung :

$T_1$ und $T_2$ = Cl

X = 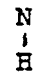

Y = aliphatischer Rest

Z = Rest der Monofluor- oder Monochlortriazinreihe.

Im Rahmen der Formel (1) sind folgende Farbstoffe bevorzugt :

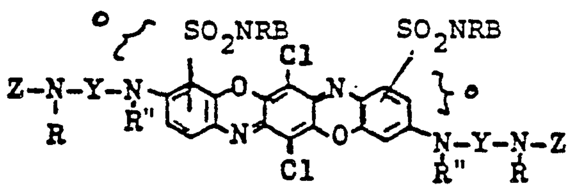

(2)

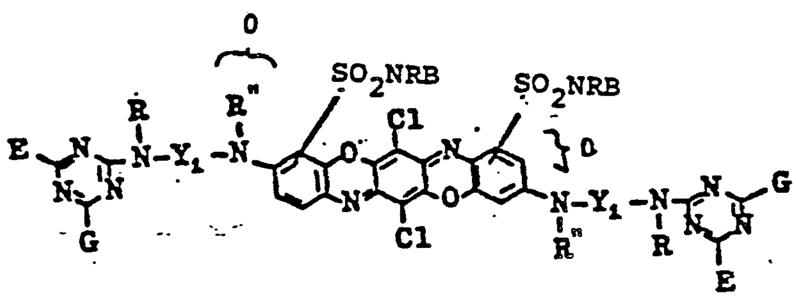

(3)

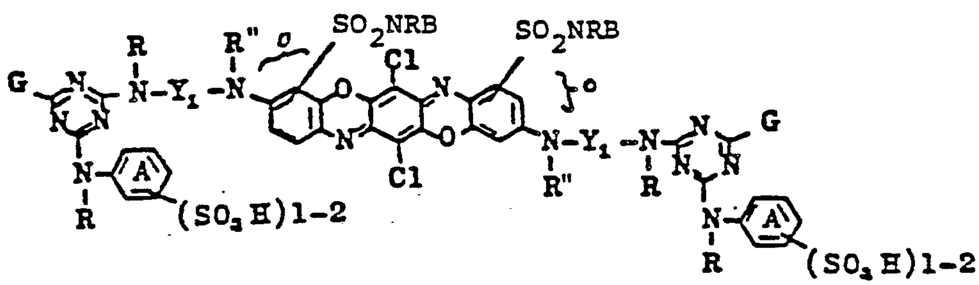

(4)

worin

G = F oder Cl

E = eine gegebenenfalls substituierte Aminogruppe

$Y_1$ = gegebenenfalls weiter substituierter zweiwertiger aliphatischer Rest,

der Benzolring A weiter substituiert sein kann, vorzugsweise durch Cl, $C_1$-$C_4$-Alkyl, $C_1$-$C_4$-Alkoxy oder COOH und die restlichen Substituenten wie in Formel (1) angegebene Bedeutung haben.

Weiterhin bevorzugt sind Farbstoffe der Formel (2), (3) und (4), wobei

R = H

$R_1$ = H oder $CH_3$ und

B = $CH_2—CH_2—SO_3H$ oder $CH_2—CH_2—OSO_3H$

und die übrigen Substituenten die oben angegebene Bedeutung besitzen.

Außerdem bevorzugt sind Farbstoffe der Formel (3) und (4), wobei

$Y_1$ = $CH_2—CH_2$, $CH_2—CH_2—CH_2$ oder $CH_2—CH_2—CH_2—CH_2$ und

G = F

und die übrigen Substituenten die oben angegebene Bedeutung haben.

Gegenstand der Erfindung ist weiterhin ein Verfahren zur Herstellung der Reaktivfarbstoffe der

Formel (1), das dadurch gekennzeichnet ist, daß man 1 Mol eines Triphendioxazinfarbstoffs der Formel

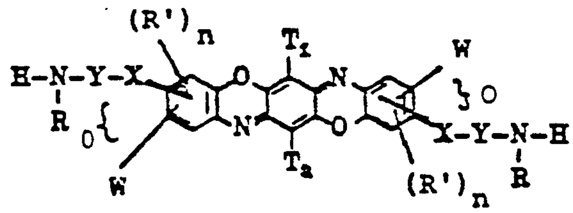

(5)

mit mindestens 2 Mol einer Reaktivkomponente der Formel

U—Z film (6)

worin U einen als Anion abspaltbaren Substituenten (vorzugsweise Halogen) darstellt, unter Abspaltung von U-H, kondensiert. Diese Acylierung wird im allgemeinen in Wasser bei Temperaturen von 0° bis 80 °C — je nach Reaktivität von 6 — und im schwach alkalischen, neutralen bis schwach saurem Medium durchgeführt.

Geeignete Reaktivkomponenten der Formel (6) sind beispielsweise solche, die den vorgenannten Reaktivgruppen zugrunde liegen, d. h. im allgemeinen die den oben genannten Reaktivgruppen Z zugrunde liegenden Halogenide, insbesondere die entsprechenden Chloride.

Bei der Herstellung der bevorzugten Farbstoffe der Formel (3) bzw. (4) ergibt sich eine weitere Variante dadurch, daß man einen Farbstoff der Formel (5) mit einem Triazin der Formel

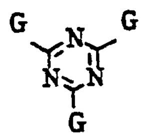

(7)

und einem Amin der Formel

H—E (8)

in beliebiger Reihenfolge kondensieren kann.

So kann man

a) 1 Mol eines Farbstoffs der Formel (5) mit 2 Mol eines Triazins der Formel (6) kondensieren und dann das Bis-acylierungsprodukt mit 2 Mol eines Amins der Formel (8) umsetzen.

b) 2 Mol eines Triazins der Formel (7) und 2 Mol eines Amins der Formel (8) kondensieren und das primäre Kondensationsprodukt mit 1 Mol eines Farbstoffs der Formel (5) umsetzen.

Die Farbstoffe der Formel (5) können nach bekannten Methoden hergestellt werden.

Man erhält sie aus den Dianiliden der Formel

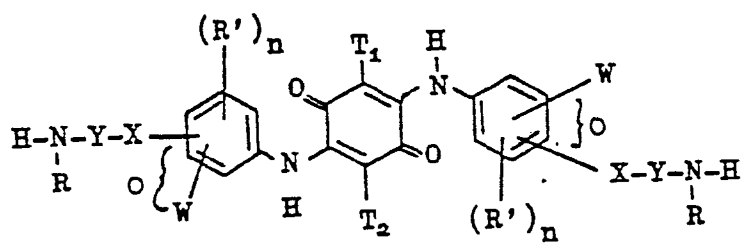

(9)

durch Ringschluß mit einem sauren Kondensationsmittel.

Als solches kommt beispielsweise infrage :

a) Oleum, wie es in den Beispielen 1, 123 und 124 der Deutschen Offenlegungsschrift 2 302 382, in den Beispielen 1, 4, 126, 183 und 184 der Deutschen Offenlegungsschrift 2 503 611, im Beispiel 1 der UK Patent Application 2 059 985 und in den Beispielen 1, 114, 235, 282 und 365 der Deutschen Offenlegungschrift 2 823 828 beschrieben ist.

b) Oleum und stöchiometrische Mengen Persulfat, wie es in der Britischen Patentschrift 1 589 915 oder im Beispiel 125 der Deutschen Offenlegungsschrift 2 823 828 beschrieben ist.

c) Oleum in Gegenwart von katalytischen Mengen Jod, wobei man mit 10-50 %igem Oleum und bei 0-40° den Ringschluß bewirkt.

Bevorzugt ist die Herstellung der Farbstoff (5) nach Verfahren b und c.

Beim Ringschluß nach a, b und c können aliphatische OH- Gruppen sulfatiert und aromatische Ringe sulfiert werden.

Die Dianilide der Formel (9) können nach Verfahren erhalten werden, wie sie im Beispiel 1 der Deutschen Offenlegungsschrift 2 503 611 und insbesondere in den Beispielen 1, 114, 125, 235, 282, 317, 339 und 365 der Deutschen Offenlegungsschrift 2 823 828 beschrieben sind.

Beispielsweise können Verbindungen der Formel (9) dadurch erhalten werden, daß man Chinone der Formel

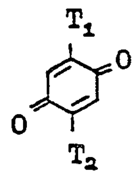

(10)

mit 2 Mol eines Diamins der Formel

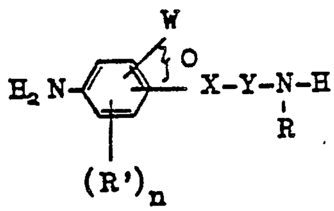

(11)

worin

$T_1$, $T_2$, R', R, X, Y, W und n die angegebene Bedeutung haben, umsetzt.

Bei der Durchführung der Reaktion zwischen dem Chinon (10) und dem Diamin (11) wird es oftmals bevorzugt, einen Überschuß des Chinons (10) über diejenige Menge zu verwenden, die für die Reaktion nötig ist. Beispielsweise können bis zu ungefähr 3 Mol Chinon dem Reaktionsgemisch zugegeben werden.

Diese Reaktion hat sich besonders geeignet erwiesen für Produkte, in denen $T_1$ und $T_2$ für H oder $C_{14}$-Alkyl, das gegebenenfalls durch OH oder $C_{1-4}$-Alkoxy substituiert ist, stehen.

Beispiele für Chinone der Formel (10) sind :

1,4-Benzochinon,
2-Methyl-1,4-benzochinon,
2-Ethyl-1,4-benzochinon,
2-n-Propyl-1,4-benzochinon,
2-Isopropyl-1,4-benzochinon,
2,2'-Ethoxyethyl-1,4-benzochinon,
2-Phenyl-1,4-benzochinon,
2-(4'-Methylphenyl)-1,4-benzochinon,
2-(4'-Methoxyphenyl)-1,4-benzochinon,
2-(3'-Chlorophenyl)-1,4-benzochinon,
2-(4'-Nitrophenyl)-1,4-benzochinon,
2,5-Dimethyl-1,4-benzochinon,
2-Methyl-5-ethyl-1,4-benzochinon,
2-Methyl-5-cyclohexyl-1,4-benzochinon,
2-Cyclohexyl-1,4-benzochinon,
2,5-Dibenzyl-1,4-benzochinon,
2,5-Dicyclohexyl-1,4-benzochinon,
2-Phenyl-5-methoxy-1,4-benzochinon und
2-Benzyl-5-methoxy-1,4-benzochinon.

Beispiele für Diamine der Formel (11) sind folgende :

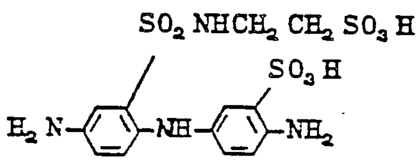

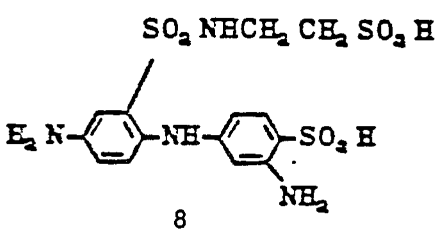

(Fortsetzung)

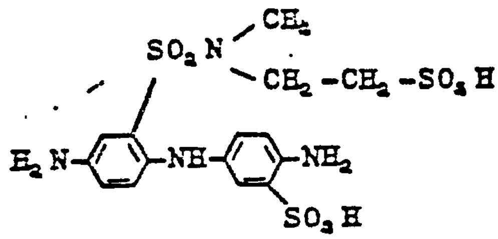

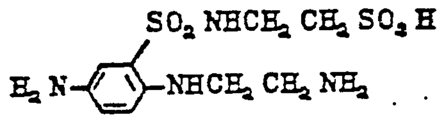

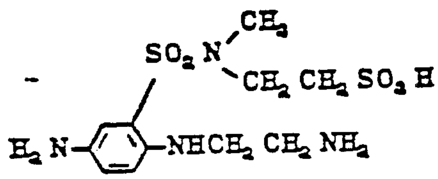

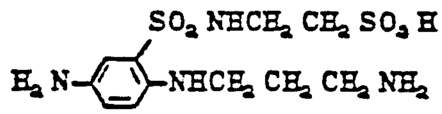

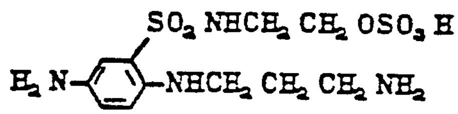

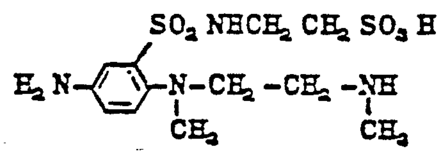

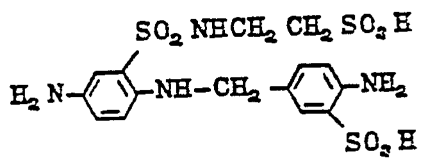

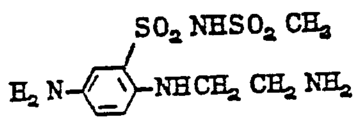

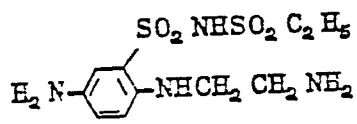

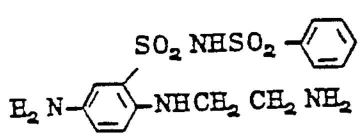

(Fortsetzung)

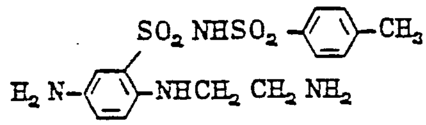

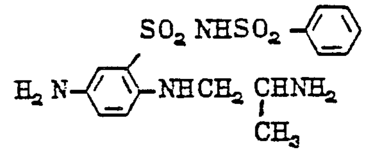

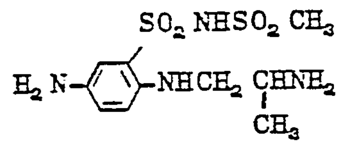

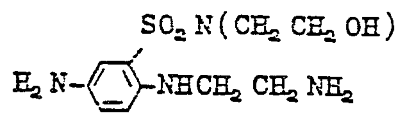

(Sulfatierung beim Ringschluß in Oleum)

Alternativ können Aminotriphendioxazinverbindungen für die Verwendung beim erfindungsgemäßen Verfahren dadurch hergestellt werden, daß man Chinone der Formel :

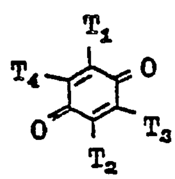

(12)

worin $T_1$ und $T_2$ die oben angegebenen Bedeutungen besitzen, eines der Symbole $T_3$ und $T_4$ für H, Cl oder Br steht und das andere der Symbole für Cl oder Br steht, mit einem Diamin der Formel (11) umsetzt.

Beispiele für Chinone der Formel (12) sind :

2,3,5,6-Tetrachlor-1,4-benzochinon,
2,3,5,6-Tetrabrom-1,4-benzochinon,
2-Methyl-3-chloro-1,4-benzochinon,
2-Methyl-6-chloro-1,4-benzochinon,
2-Methyl-3,5-dichloro-1,4-benzochinon,
2-Methyl-3,5,6-tribromo-1,4-benzochinon,
2-(4′-Methylphenoxy)-3,6-dibromo-1,4-benzochinon,
2-(3′-Methylphenoxy)-3,6-dibromo-1,4-benzochinon,
2-Methyl-3,5,6-trichloro-1,4-benzochinon,
2-Methyl-3-chloro-5-bromo-1,4-benzochinon,
2-Methyl-3,6-dichloro-1,4-benzochinon,
2-Methyl-3,6-dichloro-5-bromo-1,4-benzochinon,
2-Phenyl-3,6-dichloro-1,4-benzochinon,
2-(4′-Methoxyphenyl)-3,6-dichloro-1,4-benzochinon,
2-(4′-Chlorophenyl)-3,6-dichloro-1,4-benzochinon,
2-(4′-Nitrophenyl)-3,6-dichloro-1,4-benzochinon,
2-(4′-Nitrophenyl)-3,5,6-trichloro-1,4-benzochinon,
2,5-Dimethyl-3,6-dibromo-1,4-benzochinon,
2,5-Dimethyl-3-chloro-1,4-benzochinon,
2-Methyl-5-n-propyl-6-bromo-1,4-benzochinon,
2-Methyl-5-isopropyl-3-chloro-1,4-benzochinon,
2-Methyl-5-isopropyl-6-bromo-1,4-benzochinon und
2-(2′-Chlorophenyl)-3,5,6-tribromo-1,4-benzochinon.

Das obige Verfahren ist besonders geeignet für die Herstellung von Aminotriphendioxazinen, in denen $T_1$ für Alkyl oder Aryl oder Halogen und $T_2$ für Halogen steht.

Ein weiteres Verfahren zur Herstellung von Aminotriphendioxazinen für die Verwendung beim erfindungsgemäßen Verfahren wird dadurch ausgeführt, daß man ein Chinon der Formel :

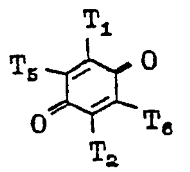

(13)

worin $T_1$ und $T_2$ die oben angegebenen Bedeutungen besitzen und eines der Symbole $T_5$ und $T_6$ für H, für Halogen oder $OR_2$ steht und das andere für $OR_2$ steht, wobei $R_2$ für Alkyl. Aryl oder Aralkyl steht, die alle gegebenenfalls substituiert sein können, mit einem Diamin der Formel (11) umsetzt.

Wenn sowohl $T_5$ als auch $T_6$ in dem Chinon der Formel (13) für $OR_2$ steht, dann können sie gleiche oder verschiedene Gruppen der Type $OR_2$ sein.

Beispiele für Chinone der Formel (13) sind :

2-Ethyl-3,6-dimethoxy-1,4-benzochinon,
2-Chloro-3,6-dimethoxy-1,4-benzochinon,
2,3,5-Trimethoxy-1,4-benzochinon,
2,5-Dimethyl-3,6-dimethoxy-1,4-benzochinon,
2,5-Dimethyl-3,6-dimethoxy-1,4-benzochinon,
2-Methyl-3,6-dimethoxy-1,4-benzochinon,
2-Methyl-5,6-dimethoxy-1,4-benzochinon,
2-Ethyl-3,6-dimethoxy-1,4-benzochinin,
2-Chloro-3-n-propyl-5-methoxy-1,4-benzochinon,
2-Chloro-3,5-dimethoxy-1,4-benzochinon,
2-Methyl-3-methoxy-1,4-benzochinon,
2,3,5,6-Tetramethoxy-1,4-benzochinon,
2,3,5,6-Tetraphenoxy-1,4-benzochinon,
2,3,5,6-Tetra-(4'-methylphenoxy)-1,4-benzochinon,
2,3,5,6-Tetra-(4'-methoxyphenoxy)-1,4-benzochinon,
2,3,5,6-Tetra-(4'-chlorphenoxy)-1,4-benzochinon,
2,3,5,6-Tetra-(3'-5'-dimethylphenoxy)-1,4-benzochinon,
2,3,5,6-Tetra-4-(3'-methyl-4'-chlorphenoxy)-1,4-benzochinon und
2,3,5,6-Tetra-(2'-naphthoxy)-1,4-benzochinon.

Das Verfahren zur Herstellung von Aminotriphendioxazinen ist besonders geeignet für Chinone der Formel (13), vorin $T_1$, $T_2$, $T_5$ und $T_6$ alle für Gruppen stehen, die aus den oben für $OR_2$ definierten Typen ausgewählt sind.

Beispiele für Triazine der Formel (7), die bei der Herstellung der bevorzugten Farbstoffe der Formel (3) und (4) eingesetzt werden, sind 2,4,6-Trichlortriazin und 2,4,6-Trifluortriazin.

Als Amine der Formeln (8), die als Ausgangsstoffe zur Herstellung der faserreaktiven Farbstoffe der Formel (3) und (4) verwenden werden können, seien beispielsweise die folgenden genannt :

Ammoniak, Methylamin, Dimethylamin, Ethylamin, Diethylamin, Propylamin, Isopropylamin, Butylamin, Dibutylamin, Isobutylamin, sek.-Butylamin, Hexylamin, Methoxyethylamin, Ethoxyethylamin, Methoxypropylamin, Chlorethylamin, Hydroxyethylamin, Dihydroethylamin, Hydroxypropylamin, Aminethansulfonsäure, ß-Sulfatoethylamin, Benzylamin, Cyclohexylamin, Anilin, o-, m- und p-Toluidin, 2,3,-, 2,4-, 2,5-, 2,6-, 3,4- und 3,5-Dimethylanilin, o-, m- und p-Chloranilin, N-Methylanilin, N-Ethylanilin, 3- oder 4-Acetylaminanilin, o-, m- und p-Nitroanilin, o-, m- und p-Aminophenol, 2-Methyl-4-nitroanilin, 2-Methyl-5-nitroanilin, 2,5-Dimethoxyanilin, 3-Methyl-4-nitroanilin, 2-Nitro-4-methylanilin, 3-Nitro-4-methylanilin, o-, m- und p-Anisidin, o-, m-und p-Phenetidin, 2-Methoxy-5-methylanilin, 2-Ethoxy-5-methoxyanilin, 4-Bromanilin, 4-Aminophenylsulfamid, 3-Trifluormethylanilin, 3- und 4-Aminophenylharnstoff, 1-Naphthylamin, 2-Naphthylamin, 2-Amino-1-hydroxynaphthalin, 1-Amino-4-hydroxy-naphthalin, 1-Amino-8-hydroxynaphthalin, 1-Amino-2-hydroxy-naphthalin, 1-Amino-7-hydroxy-naphthalin, Orthanilsäure, Metanilsäure, Sulfanilsäure, Anilin-2,4-disulfonsäure, Anilin-2,5-disulfonsäure Anilin-3,5-disulfonsäure, Anthranilsäure, m- und p-Aminobenzoesäure, 4-Aminophenylmethansulfonsäure, 2-Aminotoluol-4-sulfonsäure, 2-Aminotoluol-5-sulfonsäure, p-Aminosalicylsäure, 1-Amino-4-carboxy-benzol-3-sulfonsäure, 1-Amino-2-carboxybenzol-5-sulfonsäure, 1-Amino-5-carboxy-benzol-2-sulfonsäure, 1-Naphthylamin-2-, 3-, 4-, 5-, 6-, 7- und -8-sulfonsäure, 2-Naphthylamin-1-, -3-, -4-, -5-, -6-, -7- und -8-sulfonsäure, 1-Naphthylamin-2,4-, -2,5-, -2,7-, -2,8-, -3,5-, -3,6-, -3,7-, -3,8-, -4,6-, -4,7-, -4,8- und -5,8-disulfonsäure, 2-Naphthylamin-1,5-, -1,6-, -1,7-, -3,6-, -3,7-, -4,7-, -4,8-, -5,7- und -6,8-disulfonsäure, 1-Naphthylamin-2,4,6-, -2,4,7-, -2,5,7-, -3,5,7-, -3,6,8- und -4,6,8-trisulfonsäure, 2-Naphthylamin-1,3,7-, -1,5,7-, -3,5,7-, -3,6,7-, -3,5,7-, -3,6,8- und -4,6,8-trisulfonsäure, 2-, 3-und 4-Aminopyridin, 2-Aminobenzthiazol, 5-, 6- und 8-Amino-chinolin, 2-Aminopyrimidin, Morpholin, Piperidin und Piperazin. N-ß-Hydroxyethylanilin, Semicarbazid, Benzoesäurehydrazid, 4-(ß-Sulfatoethylsulfonyl) -anilin-3(ß-Sulfatoethylsulfonyl) -anilin, 4-Amino-1-methoxy-benzol-2-sulfonsäure, 4-Amino-1-ethoxy-benzol-2-sulfonsäure, 4-Aminophenol-6-sulfonsäure, 2-Aminophenol-5-sulfonsäure, 4-Aminotoluol-2-sulfonsäure, ß-N-Methylaminopropionitril, ß-Aminopropionitril, Aminoessigsäure.

Die neuen Reaktiv-Farbstoffe der Formel (1) eignen sich zum Färben und Bedrucken von Hydroxyl- oder Amidgruppen enthaltenden Materialien, wie Textilfasern-, Fäden und Geweben aus Wolle, Seide, synthetischen Polyamid- und Polyurethanfasern und zum waschechten Färben und Bedrucken von nativer oder regenerierter Cellulose, wobei die Behandlung von Cellulosematerialien zweckmäßigerweise in Gegenwart säurebindender Mittel und gegebenenfalls durch Hitzeeinwirkung nach den für Reaktivfarbstoffe bekanntgewordenen Verfahren erfolgt.

Die Farbstoffe der Formel (1) mit Z = H finden als Zwischen produkte für die entsprechenden Reaktivfarbstoffe Verwendung.

Die angegebenen Formeln sind die der entsprechenden freien Säuren. Die Farbstoffe wurden im allgemeinen in Form der Alkalisalzre, insbesondere der Na-Salze isoliert und zum Färben eingesetzt.

Die in den Beispielen genannten Gewichte beziehen sich auf die freie Säure. Die in den Beispielen angegebenen Farbkennzahlen beziehen sich auf Colour Index Hue Indication Chart (Indicator Numbers).

Die in den folgenden Beispielen angegebenen Formeln beziehen sich auf jeweils eines der bei der Umsetzung entstehenden isomeren Reaktionsprodukte, wobei bezüglich der Stellung der Substituenten in den beiden äußeren aromatischen Ringen des Triphendioxazin-Systems der isomeren Reaktionsprodukte auf das unter Formel (1) Gesagte verwiesen wird.

## Beispiel 1

Zu einer eiskalten, neutralen Lösung von 17,3 g o-Sulfanilsäure in 400 ml Wasser tropft man in 10 Minuten 14,8 g Cyanurfluorid und hält durch gleichzeitige Zugabe von 15 %iger Sodalösung den pH zwischen 5,5 und 6,5. Nach vollständiger Acylierung läßt man eine Lösung von 0,045 Mol des Farbstoffs der Formel

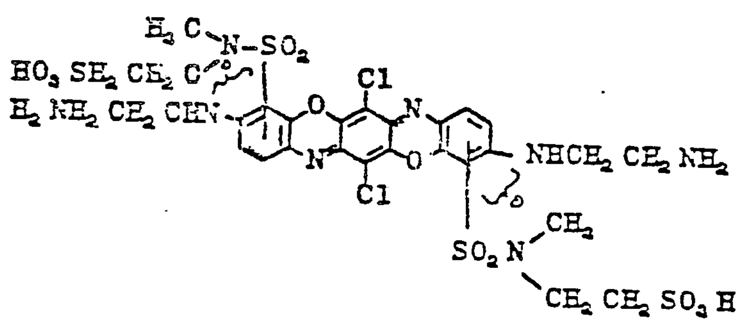

in 400 ml Wasser und 45 ml 2n-Natronlauge in dem Maße bei 0-5 °C eintropfen, daß der pH von 8,8 nicht überschritten wird. Durch weitere Zugabe von 2n-Natronlauge wird die Kondensation bei 5 °C und pH 8,5-8,8 zu Ende geführt. Der Farbstoff wird durch Zugabe von 10 Volumenprozent Kochsalz ausgesalzen, abgesaugt und im Vakuum bei 50-60 °C getrocknet. Nach dem Mahlen erhält man ein blaues Farbstoffpulver, das Baumwolle in brillanten Blautönen färbt (Farbkennzahl 13). Der Farbstoff entspricht der Formel

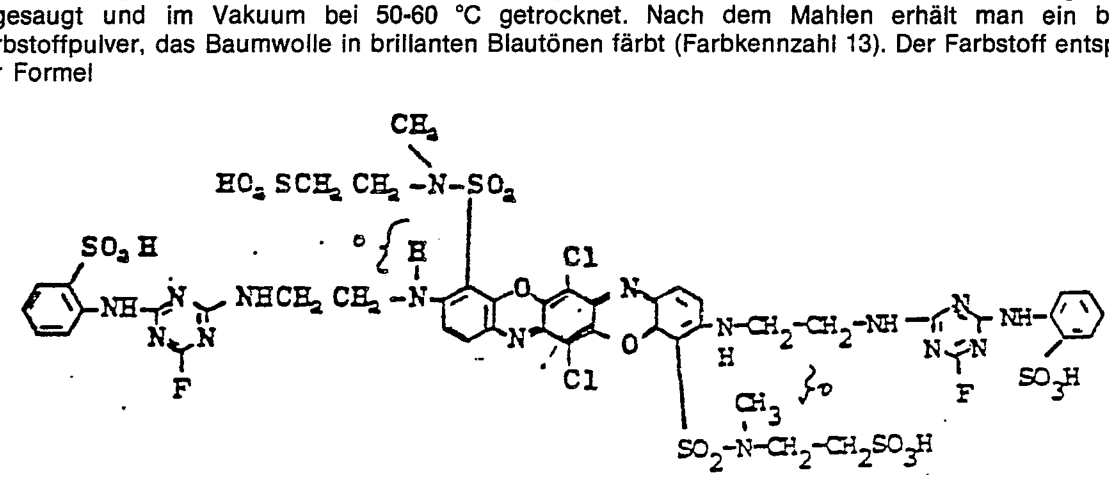

Durch Diacylierung des obigen Diaminotriphendioxazinfarbstoffs mit 2 Äquivalenten der aus den

unten aufgeführten Aminen nach den Angaben von Beispiel 1 hergestellten Difluortriazinverbindungen erhält man weitere Farbstoffe, die Baumwolle in brillanten Blautönen färben (Farbkennzahl 13).

Anilin-2,5-disulfonsäure
Anilin-2,4-disulfonsäure
m-Sulfanilsäure
p-Sulfanilsäure
2-Amino-toluol-5-sulfonsäure
2-Amino-toluol-4-sulfonsäure
2-Amino-anisol-5-sulfonsäure
2-Amino-anisol-4-sulfonsäure
4-Amino-anisol-3-sulfonsäure
4-Amino-anisol-2-sulfonsäure
2-Amino-1-chlor-benzol-4-sulfonsäure
2-Amino-1-chlor-benzol-5-sulfonsäure
2-Amino-naphthalin-1,5-disulfonsäure
1-Amino-naphthalin-4,7-disulfonsäure.

Wenn man nach den Angaben von Beispiel 1 verfährt und dabei die in Spalte 1 aufgeführten Diaminotriphendioxazinfarbstoffe und die in Spalte 2 genannten Amine für die Kondensation mit 2,4,6-Trifluortriazin einsetzt, so erhält man gleichfalls Farbstoffe, die Baumwolle in brillanten Blautönen färben (Farbkennzahl 13).

Tabelle 1

| | |
|---|---|
| 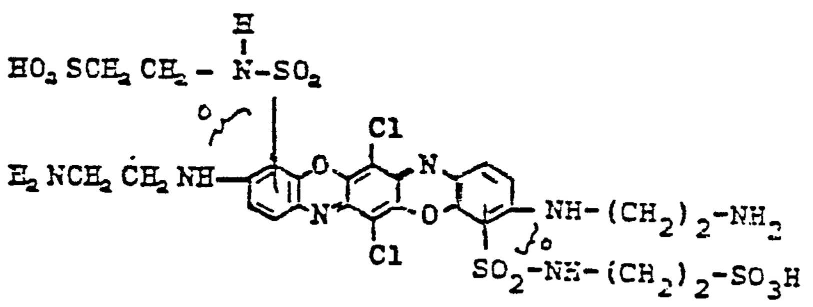 | o-Sulfanilsäure |
| „ | Anilin-2,5-disulfonsäure |
| „ | m-Sulfanilsäure |
| 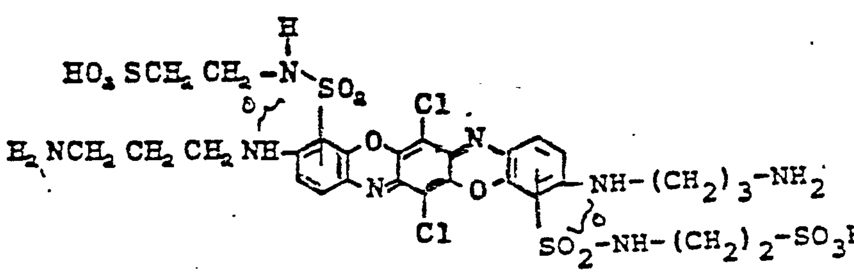 | o-Sulfanilsäure |
| „ | Anilin-2,5-disulfonsäure |
| „ | m-Sulfanilsäure |
| „ | p-Sulfanilsäure |

Beispiel 2

Zu einer eiskalten neutralen Lösung von 0,05 Mol des Diaminotriphendioxazinfarbstoffs der Formel

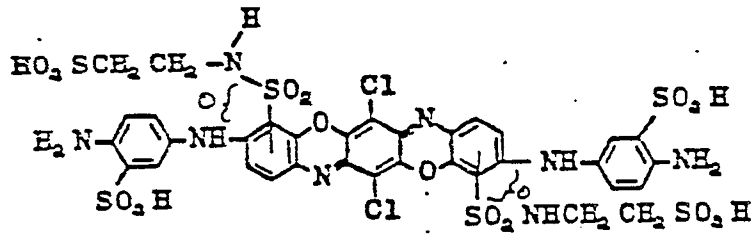

in 500 ml Wasser tropft man in 10 Minuten 15 g Cyanurfluorid und hält durch gleichzeitige Zugabe von 15 %iger Sodalösung den pH zwischen 5,5 und 6,5. Nach vollständiger Acylierung der beiden Aminogruppen stellt man mit 25 %iger Ammoniaklösung den pH auf 9,5 und rührt 3 Stunden bei 0 bis 3 °C, wobei man den pH durch weitere Zugabe von Ammoniaklösung bei 9,5 bis 9,7 hält. Man stellt dann den pH durch Einstreuen von Natriumdihydrogenphosphat auf 7 und salzt den Farbstoff mit Kochsalz aus. Nach dem Absaugen, Trocknen im Vakuumschrank bei 50-60 °C und Mahlen erhält man ein blaues Farbstoffpulver, das Baumwolle in brillanten Blautönen färbt (Farbkennzahl 14). Der Farbstoff entspricht der Formel

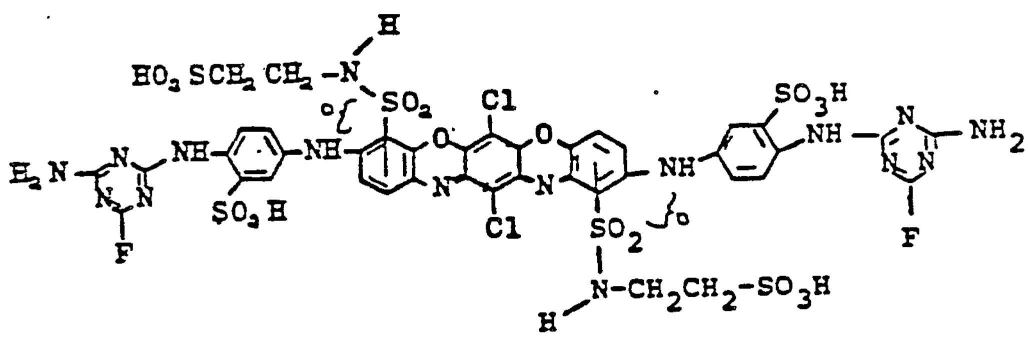

Beispiel 3

Zu einer eiskalten neutralen Lösung von 0,05 Mol des Diaminotriphendioxazinfarbstoffs aus Beispiel 2 in 500 ml Wasser gibt man 21 g Cyanurchlorid und rührt bei pH 5,5 bis 6,5 bis die Acylierung der beiden Aminogruppen beendet ist. Anschließend stellt man mit 25 %iger Ammoniaklösung auf pH 9, erwärmt auf 35 °C bis 40 °C und rührt 3 Stunden unter diesen Bedingungen. Dann stellt man mit Natriumhydrogenphosphat den pH auf 7 und salzt den Farbstoff aus. Nach dem Trocknen im Vakuumtrockenschrank bei 80 °C bis 90 °C erhält man ein blaues Farbstoffpulver, das Baumwolle in brillanten Blautönen färbt (Farbkennzahl 14). Der Farbstoff entspricht folgender Formel

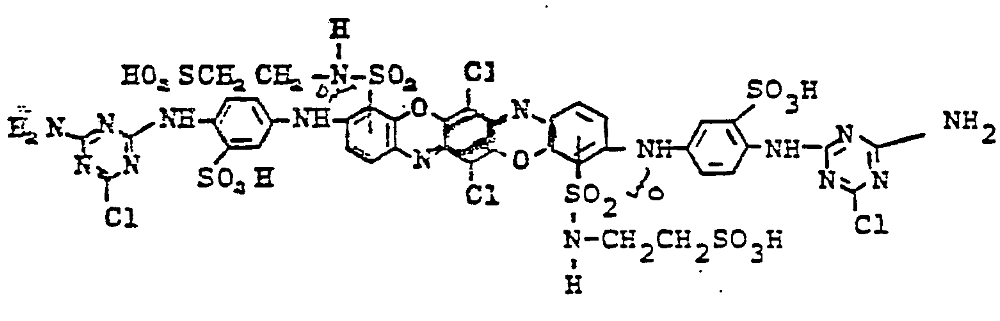

Beispiel 4

0,05 Mol des Farbstoffs der Formel

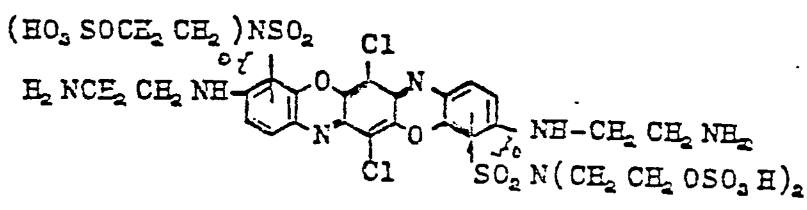

werden in 500 ml Wasser angerührt.

Man tropft bei 10 °C 16,8 g 2,4,6-Trifluor-5-chlor-pyrimidin ein und hält den pH durch Zugabe von 2n-Natronlauge bei 8,5-8,8. Nach beendeter Acylierung wird der Farbstoff angesalzen, abgesaugt, bei 60 °C im Vakuumtrockenscharnk getrocknet und gemahlen. Man erhält ein blaues Farbstoffpulver, das Baumwolle in brillanten Blautönen färbt (Farbkennzahl 13).

Der Farbstoff entspricht der Formel

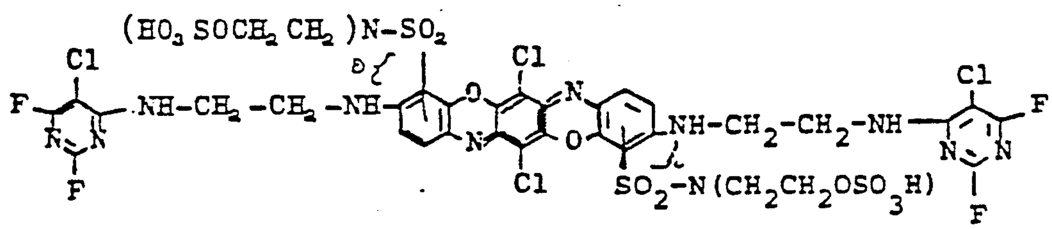

Wenn man nach den Angaben dieses Beispiels verfährt, aber anstelle von 2,4,6-Trifluor-5-chlor-pyrimidin die nachfolgend aufgeführten Reaktivkomponenten verwendet, so resultieren gleichfalls wertvolle Reaktivfarbstoffe, die Baumwolle in brillanten Blautönen färben (Farbkennzahl 13).

2,4-Difluor-5,6-dichlorpyrimidin
2,4-Difluor-5-chlor-6-methyl-pyrimidin
4,6-Difluor-5-chlor-pyrimidin
2-Methyl-4,6-difluor-5-chlor-pyrimidin
2-Methoxyethoxy-4,6-dichlortriazin.

Beispiel 5

Zu einer eiskalten, neutralen Lösung von 17,3 g o-Sulfanilsäure in 400 ml Wasser tropft man in 10 Minuten 14,8 g Cyanurfluorid und hält durch gleichzeitige Zugabe von 15 %iger Sodalösung den pH zwischen 5,5 und 6,5. Nach vollständiger Acylierung läßt man eine Lösung von 0,045 Mol des Farbstoffs der Formel

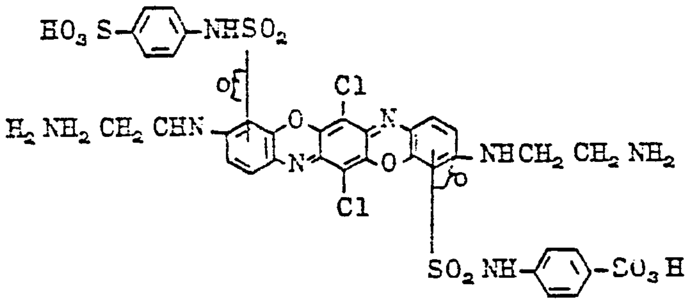

in 400 ml Wasser und 45 ml 2-Natronlauge in dem Maße bei 0-5 °C eintropfen, daß der pH von 8,8 nicht überschritten wird. Durch weitere Zugabe von 2n-Natronlauge wird die Kondensation bei 5 °C und pH 8,5-8,8 zu Ende geführt. Der Farbstoff wird durch Zugabe von 10 Volumenprozent Kochsalz ausgesalzen, abgesaugt und im Vakuum bei 50-60 °C getrocknet. Nach dem Mahlen erhält man ein blaues Farbpulver, das Baumwolle in brillanten Blautönen färbt (Farbkennzahl 13). Der Farbstoff entspricht der Formel

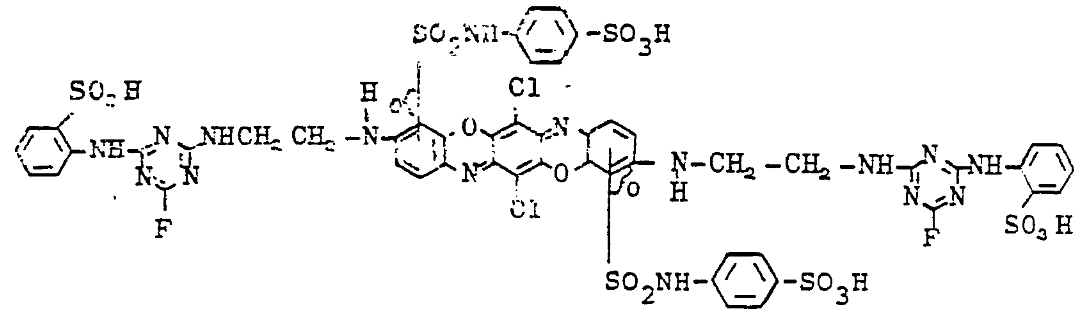

Durch Diacylierung des obigen Diaminotriphendioxazinfarbstoffs mit 2 Äquivalenten der aus den unten aufgeführten Aminen nach den Angaben von Beispiel 1 hergestellten Difluortriazinverbindungen erhält mam weitere Farbstoffe, die Baumwolle in brillanten Blautönen färben Farbkennzahl 13).

Anilin-2,5-disulfonsäure
Anilin-2,4-disulfonsäure
m-Sulfanilsäure
p-Sulfanilsäure
2-Amino-toluol-5-sulfonsäure
2-Amino-toluol-4-sulfonsäure
2-Amino-anisol-5-sulfonsäure
2-Amino-anisol-4-sulfonsäure
4-Amino-anisol-3-sulfonsäure
4-Amino-anisol-2-sulfonsäure
2-Amino-1-chlor-benzol-4-sulfonsäure
2-Amino-1-chlor-benzol-5-sulfonsäure
2-Amino-naphthalin-1,5-disulfonsäure
1-Amino-naphthalin-4,7-disulfonsäure.

Wenn man nach den Angaben von Beispiel 5 verfährt, dabei die aufgeführten Diaminotriphendioxazine, die durch die folgende, allgemeine Formel charakterisiert wird, und die im Anschluß an Beispiel 1 genannten Amine für die Umsetzung mit dem Trifluortriazin verwendet, so erhält man gleichfalls Farbstoffe, die Baumwolle in brillanten Blautönen färben.

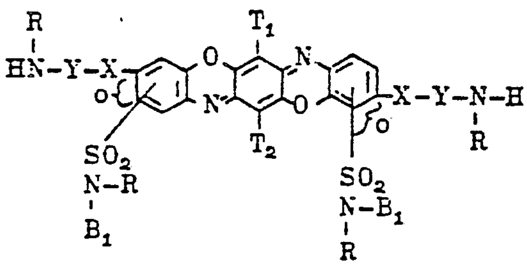

| $T_1$ | $T_2$ | $B_1$ | R | $-X-Y-\underset{H}{N}-R$ |
|---|---|---|---|---|
| Cl | Cl | 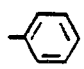 | $CH_2CH_2OSO_3H$ | $-CH_2-CH_2-NH_2$ |
| " | " | 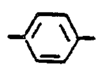 $-SO_3H$ | $CH_3$ | " |
| " | " | 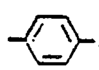 $-SO_3H$ | $C_2H_5$ | " |
| " | " | 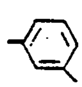 $SO_3H$ | H | " |
| Br | Br | 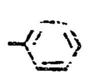 | $-CH_2CH_2OSO_3H$ | |
| Cl | Cl | 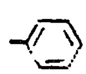 | $CH_2CH_2OSO_3H$ | $-CH_2-CH(CH_3)-NH_2$ |
| " | " | 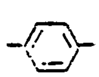 $-SO_3H$ | $C_2H_5$ | " |
| " | " | 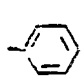 | $CH_2CH_2OSO_3H$ | $-CH_2-CH_2-NH_2$ |

Beispiel 6

12,6 g 2-Aminobenzol-1,4-disulfonsäure werden in 50 ml Wasser durch Zutropfen von 10 %iger Sodalösung und Einstellen eines pH-Wertes von 5,5 gelöst. Man läßt nach Abkühlen der Lösung bei 0-5° 5,0 ml Cyanurfluorid innerhalb von 5 Minuten beo 0-5° zutropfen, hält den pH-Wert mittels 10 %iger Sodalösung auf 4,2-4,7 und rührt zur Beendigung der Kondensation noch 20 Minuten weiter.

15,0 g einer Disulfimidkomponente der Formel,

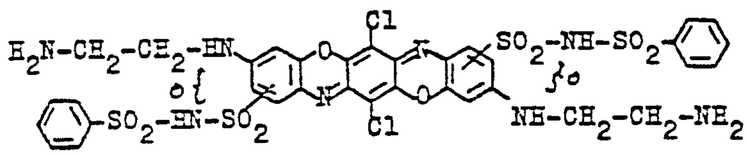

hergestellt durch Kondensation von 2,3,5,6-Tetrachlorchinon mit 5-Amino-2-(β-amino-ethylamino)-benzol-phenyl-disulfimid und nachfolgenden oxidativen Ringschluß des Kondensationsproduktes in Oleum, werden in 300 ml Wasser suspendiert und durch Zugabe von 62 ml 2n Natronlauge bei pH 12 gelöst.

Die Lösung der Reaktivkomponente und des Farbkörpers werden nun in 50 ml vorgelegtes Wasser bei 0-5° gleichzeitig so eingetropft, daß sich im Reaktionsgemisch ein pH-Wert von 9,0 einstellt und beide Lösungen in etwa 15 Minuten gleichzeitig eingetragen sind. Die entstehende Lösung wird zur Beendigung der Kondensation einige Stunden bei 0-5° mit 1n Natronlauge weiter auf pH 8,8-9,0 gehalten. Man läßt die Temperatur unter ständiger pH-Kontrolle über Nacht auf 20° ansteigen, stellt den pH-Wert dann auf 7,5 und salzt den erhaltenen Reaktivfarbstoff anschließend mit 22 % Natriumchlorid aus. Die erhaltene Fällung wird abgesaugt, mit 25 %iger Natriumchloridlösung gewaschen und nach Zusatz von Phosphaten als Puffer bei 50° im Umluftschrank getrocknet. Der erhaltene Farbstoff entspricht in Form der freien Säure der Formel

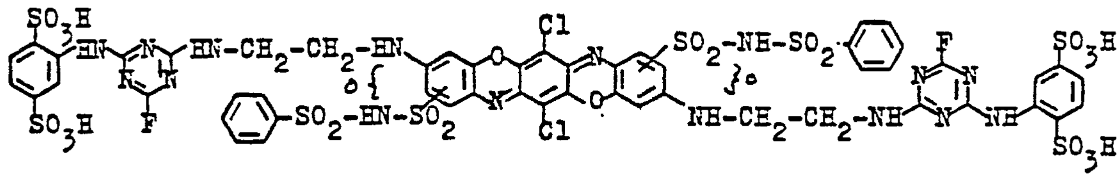

Beispiel 7

7,5 g 2-Aminobenzolsulfonsäure werden in 90 ml Wasser bei pH 6-7 gelöst. Man stellt den pH-Wert auf 5,0, läßt 4,3 ml Cyanurfluorid in 5 Minuten bei 0-5° zutropfen und hält den pH-Wert mit 5 %iger Sodalösung auf 4,5-4,8, wobei eine teilweise Ausfällung der Reaktivkomponente eintritt.

14,0 g der im vorhergehenden Beispiel beschriebenen Disulfimid-Farbkomponente werden in 140 ml Wasser mit 50 ml 2n Natronlauge bei pH 12 gelöst.

Die Lösung des Farbkörpers und die Suspension der Reaktivkomponente werden nun in 50 ml vorgelegtes Wasser bei 0-5° gleichmäßig in etwa 20 Minuten so eingebracht, daß sich der pH-Wert auf 9,0 einstellt und beide Komponenten gleichzeitig eingetragen sind. Man hält dann den pH-Wert durch Zutropfen von 1n Natronlauge weiter auf 8,8-9,0, wobei eine zuerst auftretende teilweise Fällung nach wenigen Minuten in Lösung geht. Die weitere pH- und Temperaturführung gestaltet man in der im vorhergehenden Beispiel beschriebenen Weise. Aus der erhaltenen Lösung salzt man den Farbstoff durch Zusatz von 10 % Natriumchlorid aus, saugt die Fällung ab und wäscht den Filterkuchen mit 10 %iger Natriumchloridlösung. Nach Trocknung erhält man das Natriumsalz eines Farbstoffes, der in Form der freien Säure der Formel

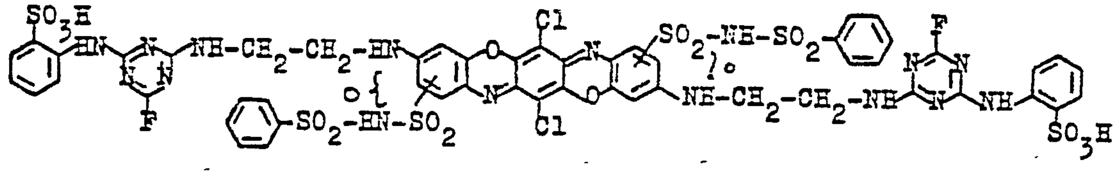

entspricht und Baumwolle aus langer Flotte bei 40 und 50° in kräftigen klaren Blautönen färbt.

Er färbt Baumwolle aus langer Flotte bei 40° in klarem Blauton und gibt auf Baumwolle und Zellwolle kräftige blaue Drucke mit gutem Aufbauvermögen.

Beispiel 8

Einen ähnlichen Farbstoff der Formel,

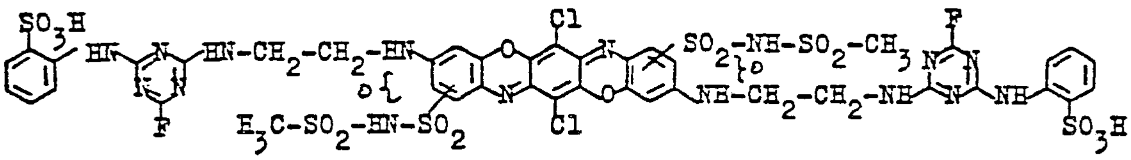

der Baumwolle aus langer Flotte in klaren Blautönen färbt, erhält man, wenn man im Beispiel 7 an Stelle des Bis-(ß-aminoethylamino)-bis-phenyldisulfimid-dioxazins 12,0 g des entsprechenden Bis-methyldisulfimids einsetzt und im übrigen entsprechend verfährt.

Weitere, Cellulosefasern in klaren Blautönen färbende oder bedruckende Farbstoffe erhält man, wenn man die in nachfolgender Tabelle genannten Dioxazin-Komponenten der Spalte 1 mit den Reaktivkomponenten der Spalte 2 kondensiert.

| Dioxazinkomponente | Reaktivkomponete |
|---|---|
| 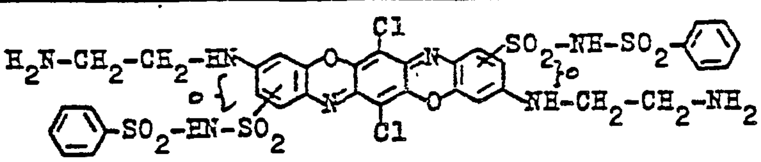 | 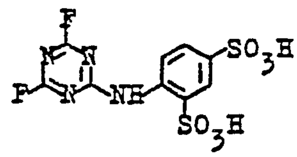 |
| " | 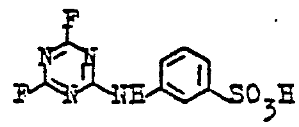 |
| " | 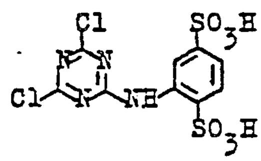 |
| " | 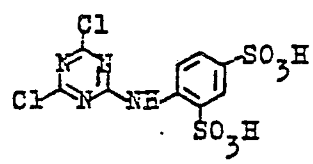 |
| 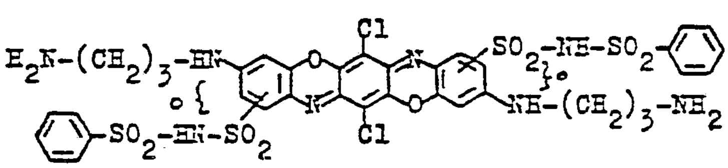 | 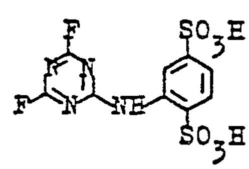 |
| " | 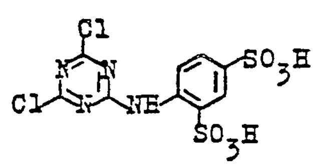 |
| " | 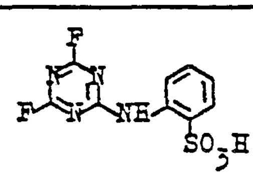 |

| Dioxazinkomponente | Reaktivkomponente |
|---|---|
| 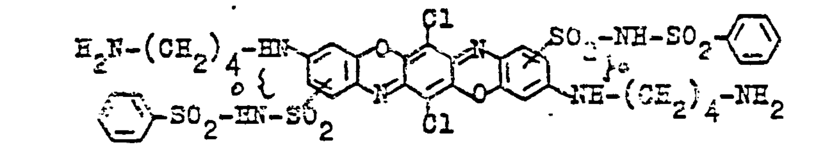 | 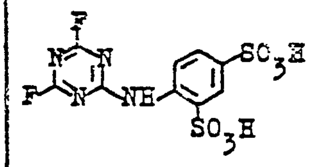 |
| 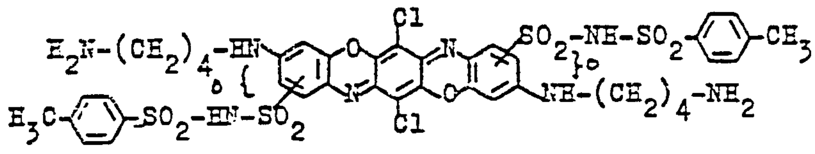 | 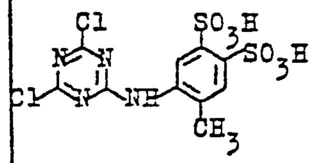 |
| 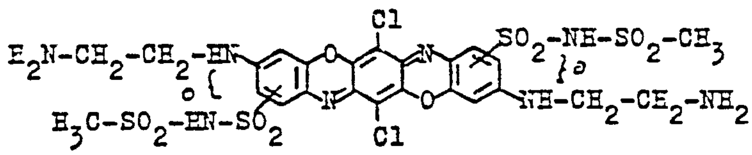 | 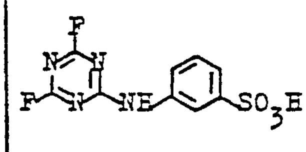 |
| „ | 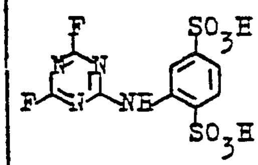 |
| 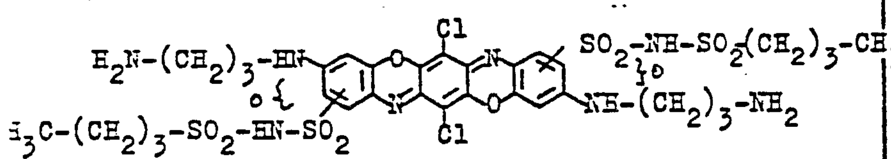 | 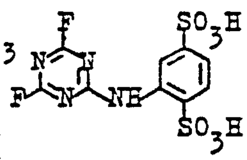 |
| „ | 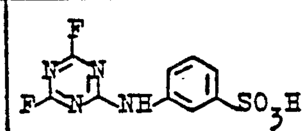 |
| 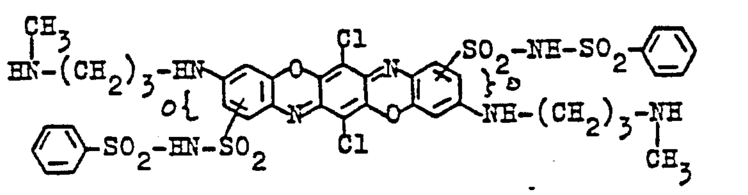 | 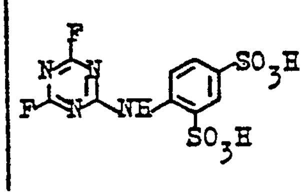 |

Beispiel 9

Der in Beispiel 1, 1. Tabellenbeispiel verwendete Triphendioxazinfarbstoff kann wie folgt erhalten werden :

a) 84,9 g des Dianilides der Formel

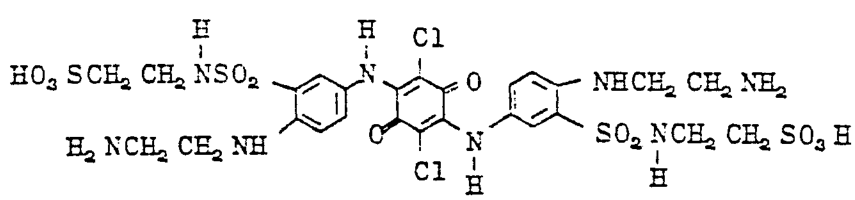

werden in 450 ml 20 %iges Oleum bei 15-18 % eingetragen. Dann werden 67,5 g Kaliumpersulfat — gleichmäßig über eine Stunde verteilt — bei 15-18 % zugegeben. Man rührt eine Stunde nach und trägt auf ein Eiswassergemisch aus so daß die Temperatur nicht über 20° ansteigt. Der Farbstoff wird abgesaugt und die Paste in Eiswasser angerührt. Man stellt mit Natronlauge auf pH 7, saugt ab und wäscht die Paste mit Wasser. Der Farbstoff entspricht der Formel

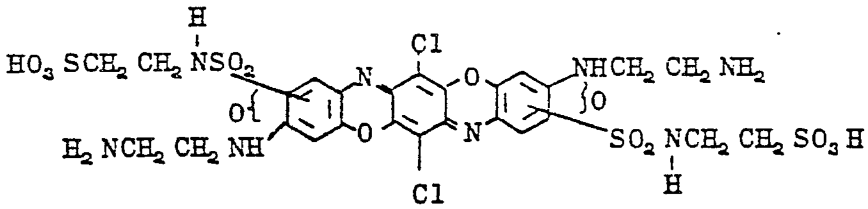

b) 84,9 g des Dianilides aus Beispiel 9 a) werden bei 15-18° in einer Stunde in ein Gemisch aus 200 ml 20 %igem und 100 ml 65 %igem Oleum, das vorher mit 1 g Kaliumjodid versetzt wurde, eingetragen. Man rührt eine halbe Stunde nach und trägt dann die Schmelze auf ein Eiswassergemisch aus, so daß die Temperatur nicht über 20° steigt.

Die weitere Aufarbeitung geschieht wie in Beispiel 9a). Der resultierende Farbstoff entspricht der dort angegebenen Formel.

In den Beispielen 1 bis 8 wird jeweils eine der möglichen isomeren Strukturen angegeben.

**Patentansprüche**

1. Triphendioxazinfarbstoffe der Formel

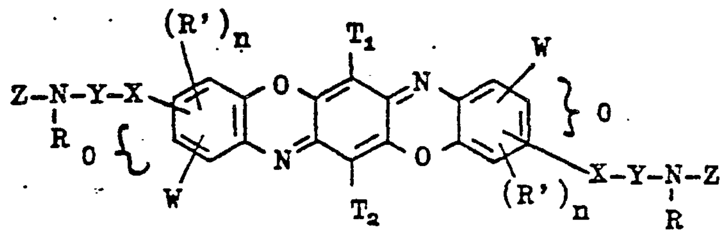

worin

R für Wasserstoff oder gegebenenfalls substituiertes $C_1$-$C_6$-Alkyl steht,

$T_1$ und $T_2$ unabhängig voneinander für H, Cl, Br, gegebenenfalls sulbstituiertes $C_1$-$C_4$-Alkoxy, $C_1$-$C_4$-Alkyl, Phenyl oder Phenoxy stehen,

X für O, S oder

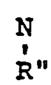

steht,

Z eine Reaktivgruppe oder Wasserstoff bedeutet,

Y für einen gegebenenfalls weitersubstituierten zweiwertigen aliphatischen, araliphatischen, cycloaliphatischen oder aromatischen Rest steht,

R′ für Halogen, insbesondere C1 und Br, $SO_3H$, COOH, gegebenenfalls substituiertes $C_1$-$C_4$-Alkyl oder $C_1$-$C_4$-Alkoxy steht,

R″ für Wasserstoff oder gegebenenfalls substituiertes $C_1$-$C_4$-Alkyl steht und für den Fall daß Y einen gegebenenfalls substituierten zweiwetigen aliphatischen Rest bedeutet, zusammen mit R auch für Alkylen stehen kann,

n 0 oder 1 bedeutet und

W für eine gegebenenfalls substituierte Sulfonamidgruppe steht

und worin der Rest W in ortho-Stellung zum Substituenten

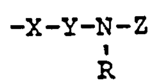

steht.

2. Farbstoffe gemäß Anspruch 1), wobei in der Formel (I) W für eine der folgenden Bedeutungen steht :

a) Rest der Formel

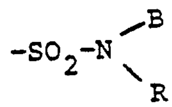

wobei B = $C_2$-$C_6$-Alkylen—$(O)_n$—$SO_3H$

b) Rest der Formel

$$—SO_2—NH—SO_2—R'''$$

wobei R''' für gegebenenfalls substituiertes Alkyl oder Aryl steht,

c) Rest der Formel

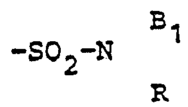

wobei $B_1$ = aromatischer Rest mit mindestens einer $SO_3H$-Gruppen, bevorzugt ein Phenylrest mit 1 bis 2 $SO_3H$-Gruppen,

und worin R die in Anspruch 1 angegebene Bedeutung besitzt.

3. Reaktivfarbstoffe der Formel

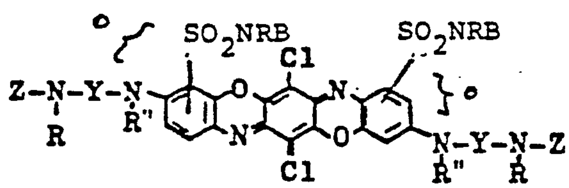

worin B, R und Z die in Anspruch 1 bzw. 2 angegebene Bedeutung haben.

4. Reaktivfarbstoffe der Formel

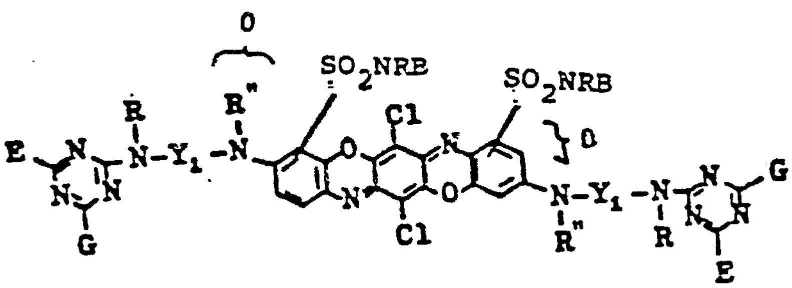

worin B und R die in Anspruch 1 bzw. 2 angegebene Bedeutung haben,

G = F oder Cl

E = eine gegebenenfalls substituiertes Aminogruppe

$Y_1$ = zweiwertiger aliphatischer Rest.

5. Reaktivfarbstoffe der Formel

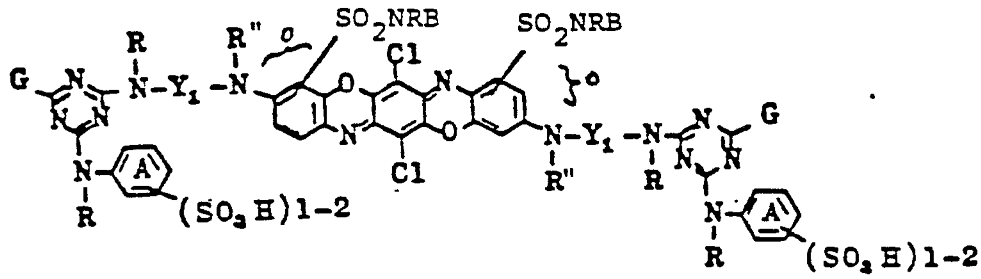

worin B, R und G die in Anspruch 1, 2 bzw. 4 angegebene Bedeutung haben und der Benzolkern A noch weitere Substituenten enthalten kann.

6. Reaktivfarbstoffe gemäß Ansprüchen 3 bis 5, wobei

R = H

$R_1$ = H oder $CH_3$

B = $CH_2—CH_2—SO_3H$ oder $CH_2—CH_2—OSO_3H$

und die restlichen Substituenten, die in den Ansprüchen 3 bis 5 angegebenen Bedeutungen besitzen.

7. Reaktivfarbstoffe gemäß Ansprüchen 4 und 5, wobei

$Y_1$ = $CH_2—CH_2$, $CH_2—CH_2—CH_2$ oder $CH_2—CH_2—CH_2—CH_2$,

G = F

und die übrigen Substituenten, die in den Ansprüchen 4 bis 5 angegebenen Bedeutungen besitzen.

8. Verfahren zur Herstellung der Reaktivfarbstoffe des Anspruchs 1, dadurch gekennzeichnet, daß man 1 Mol eines Triphendioxazinfarbstoffs der Formel

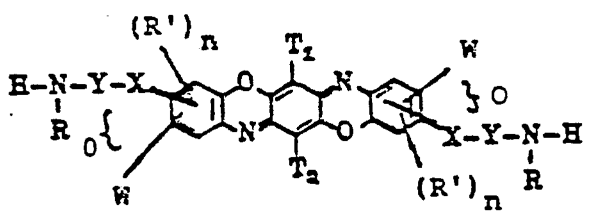

worin R, $R^1$, X, Y, W, $T_1$, $T_2$ und n die in Anspruch 1 angegebene Bedeutung haben mit mindestens 2 Mol einer Reaktivkomponente der Formel

U—Z

worin U einen als Anion abspaltbaren Substituenten darstellt, unter Abspaltung von U-H kondensiert.

9. Verwendung der Reaktivfarbstoffe der Ansprüche 1 bis 7 zum Färben und Bedrucken von hydroxylgruppenhaltigen oder amidgruppenhaltigen Fasermaterialien.

10. Mit den Reaktivfarbstoffen gemäß Anspruch 1 bis 7 gefärbtes oder bedrucktes hydroxylgruppenhaltiges oder amidgruppenhaltiges Fasermaterial.

**Claims**

1. Triphendioxazine dyestuffs of the formula

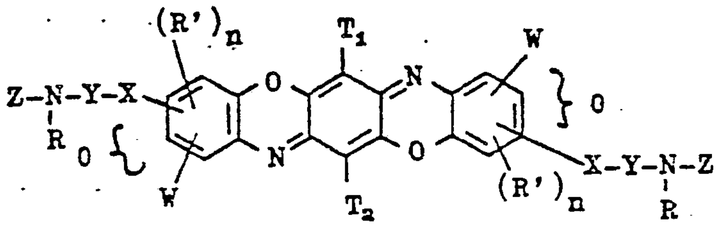

wherein

R represents hydrogen or optionally substituted $C_1$-$C_6$-alkyl,

$T_1$ and $T_2$, independently of each other, represent H, Cl, Br, optionally substituted $C_1$-$C_4$-alkoxy, $C_1$-$C_4$-alkyl, phenyl or phenoxy,

X represents O, S or

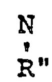

Z denotes a reactive group or hydrogen,

Y represents an optionally further-substituted divalent aliphatic, araliphatic, cycloaliphatic or aromatic radical,

R' represents halogen, in particular Cl and Br, $SO_3H$, COOH, optionally substituted $C_1$-$C_4$-alkyl or $C_1$-$C_4$-alkoxy,

R'' represents hydrogen or optionally substituted $C_1$-$C_4$-alkyl, and, in the event that Y denotes an optionally substituted divalent aliphatic radical, can also, together with R, represent alkylene,

n denotes 0 or 1 and

W represents an optionally substituted sulphonamide group and wherein the radical W is in the ortho-position relative to the substituent

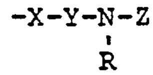

2. Dyestuffs according to Claim 1, where in the formula (1) W represents one of the following meanings :

a) a radical of the formula

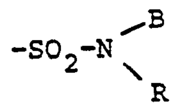

where B = $C_2$-$C_6$-alkylene—$(O)_n$—$SO_3H$

b) a radical of the formula

$$—SO_2—NH—SO_2—R'''$$

where R''' represents optionally substituted alkyl or aryl,

c) a radical of the formula

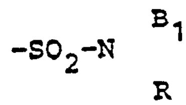

where $B_1$ = an aromatic radical having at least one $SO_3H$ group, preferably a phenyl radical having 1 to 2 $SO_3H$ groups,
and wherein R has the meaning given in Claim 1.

3. Reactive dyestuffs of the formula

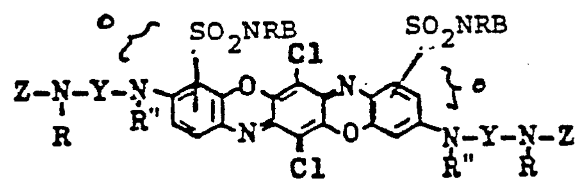

wherein B, R and Z have the meaning given in Claim 1 and 2.

4. Reactive dyestuffs of the formula

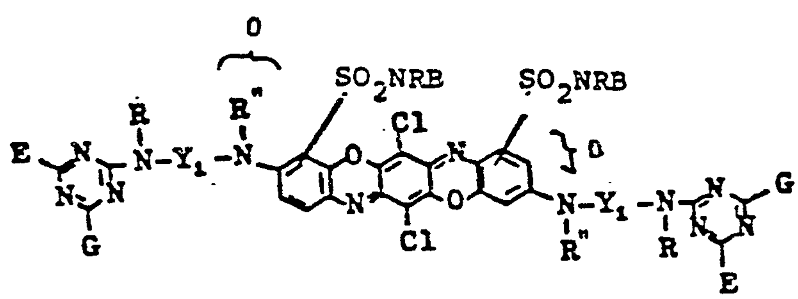

wherein

B and R have the meaning given in Claim 1 and 2,
G = F or Cl,
E = an optionally substituted amino group and
$Y_1$ = a divalent aliphatic radical.

5. Reactive dyestuffs of the formula

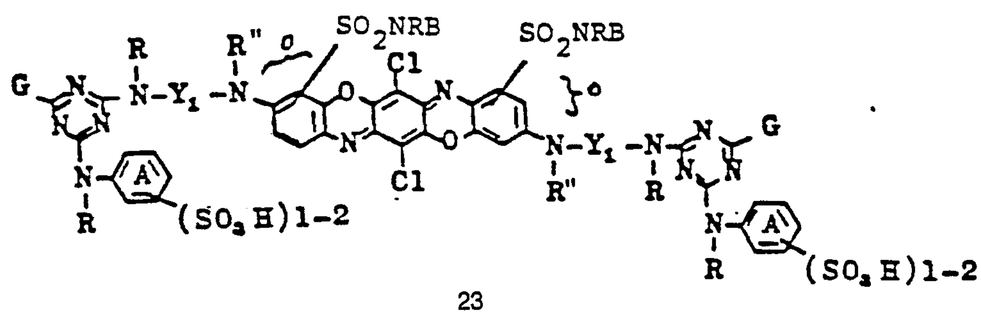

wherein B, R and G have the meaning given in Claim 1, 2 and 4 and the benzene nucleus A can contain further substituents.

6. Reactive dyestuffs according to Claims 3 to 5, wherein

R = H

$R_1$ = H or $CH_3$

B = $CH_2—CH_2—SO_3H$ or $CH_2—CH_2—OSO_3H$

and the remaining substituents have the meanings given in Claims 3 to 5.

7. Reactive dyestuffs according to Claims 4 and 5, wherein

$Y_1$ = $CH_2—CH_2$, $CH_2—CH_2—CH_2$ or $CH_2—CH_2—CH_2—CH_2$,

G = F

and the remaining substituents have the meanings given in Claims 4 to 5.

8. Process for preparing the reactive dyestuffs of Claim 1, characterised in that 1 mole of a triphendioxazine dyestuff of the formula

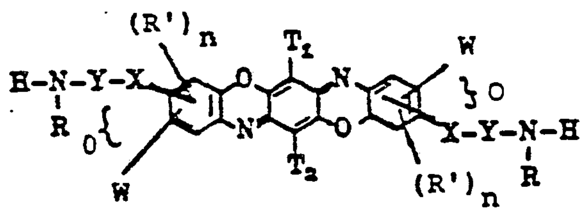

wherein R, $R^1$, X, Y, W, $T_1$, $T_2$ and n have the meaning given in Claim 1, is condensed with at least 2 moles of a reactive component of the formula

U—Z

wherein U represents a substituent detachable as an anion, with the elimination of U-H.

9. The use of the reactive dyestuffs of Claims 1 to 7 for dyeing and printing hydroxyl-group-containing or amide-group-containing fibre materials.

10. Hydroxyl-group-containing or amide-group-containing fibre material dyed or printed with the reactive dyestuffs according to Claim 1 to 7.

**Revendications**

1. Colorants triphénodioxaziniques de formule

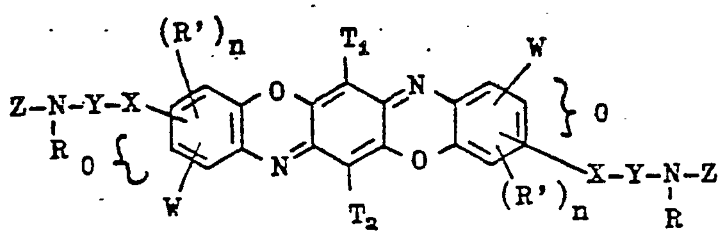

dans laquelle

R est l'hydrogène ou un groupe alkyle en $C_1$ à $C_6$ éventuellement substitué,

$T_1$ et $T_2$ représentent, indépendamment l'un de l'autre, H, Cl, Br, un groupe alkoxy en $C_1$ à $C_4$, alkyle en $C_1$ à $C_4$, phényle ou phénoxy éventuellement substitué,

X représente O, S ou

$$\underset{R''}{\overset{|}{N}}$$

Z désigne un groupe réactif ou de l'hydrogène,

Y est un reste aliphatique, araliphatique, cycloaliphatique ou aromatique divalent encore substitué, le cas échéant,

R' est un halogène, notamment Cl ou Br, un groupe $SO_3H$, COOH, un groupe alkyle en $C_1$ à $C_4$ ou alkoxy en $C_1$ à $C_4$ éventuellement substitué,

R" est l'hydrogène ou un groupe alkyle en $C_1$ à $C_4$ éventuellement substitué et, au cas où Y est un reste aliphatique divalent éventuellement substitué, R" peut aussi former avec R un groupe alkylène,

n a la valeur 0 ou 1 et

W est un groupe sulfamido éventuellement substitué
et dans laquelle le reste W est en position ortho par rapport au substituant

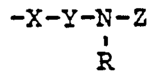

2. Colorants suivant la revendication 1, dans la formule (I) desquels W a l'une des définitions suivantes :

a) un reste de formule

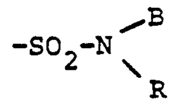

dans laquelle B est un groupe (alkylène en $C_2$ à $C_6$)—$(O)_n$—$SO_3H$

b) un reste de formule

$$—SO_2—NH—SO_2—R'''$$

dans laquelle R''' est un groupe alkyle ou aryle éventuellement substitué,

c) un reste de formule

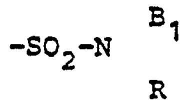

dans laquelle $B_1$ est un reste aromatique portant au moins un groupe $SO_3H$, de préférence un reste phényle portant 1 ou 2 groupes $SO_3H$,
et R a la définition indiquée dans la revendication 1.

3. Colorants réactifs de formule

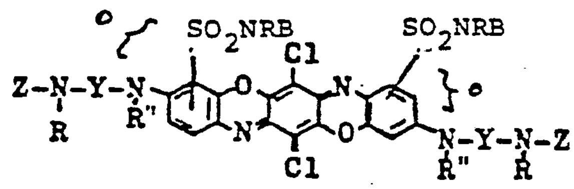

dans laquelle B, R et Z ont la définition indiquée dans la revendication 1 ou la revendication 2.

4. Colorants réactifs de formule

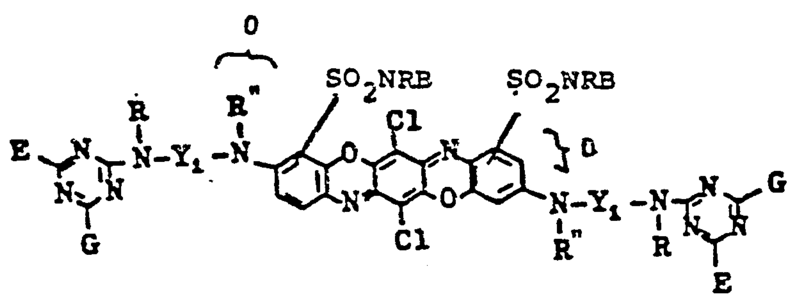

dans laquelle B et R ont la définition indiquée dans la revendication 1 ou 2,
G représente F ou Cl
E est un groupe amino éventuellement substitué
$Y_1$ est un reste aliphatique divalent.

5. Colorants réactifs de formule

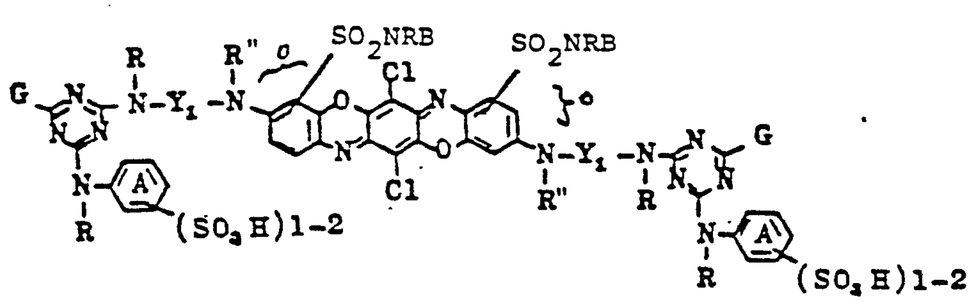

dans laquelle B, R et G ont la définition indiquée dans la revendication 1, 2 ou 4 et le noyau benzénique A peut porter encore d'autres substituants.

6. Colorants réactifs suivant les revendications 3 à 5, dans lesquels
R représente H
$R_1$ représente H ou $CH_3$
B représente $CH_2—CH_2—SO_3H$ ou $CH_2—CH_2—OSO_3H$ et les substituants restants ont les définitions indiquées dans les revendications 3 à 5.

7. Colorants réactifs suivant les revendications 4 et 5, dans lesquels
$Y_1$ représente $CH_2—CH_2$, $CH_2—CH_2—CH_2$ ou $CH_2—CH_2—CH_2—CH_2$,
G représente F
et les autres substituants ont les définitions indiquées dans les revendications 4 et 5.

8. Procédé de production des colorants réactifs suivant la revendication 1, caractérisé en ce qu'on condense 1 mole d'un colorant triphénodioxazinique de formule

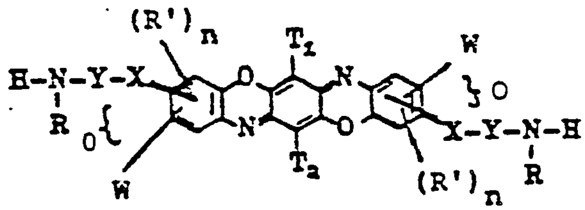

dans laquelle R, $R^1$, X, Y, W, $T_1$, $T_2$ et n ont les définitions indiquées dans la revendication 1, avec au moins 2 moles d'un composant réactif de formule

$$U—Z$$

dans laquelle U représente un substituant pouvant être éliminé comme anion, avec élimination de U-H.

9. Utilisation des colorants réactifs suivant les revendications 1 à 7 pour la teinture et l'impression de matières fibreuses contenant des groupes hydroxyle ou des groupes amido.

10. Matière fibreuse contenant des groupes hydroxyle ou amido, teinte ou imprimée avec les colorants réactifs suivant les revendications 1 à 7.